(19) Europäisches Patentamt
European Patent Office
Office européen des brevets

(11) EP 4 261 325 A2

(12) EUROPEAN PATENT APPLICATION

(43) Date of publication:
**18.10.2023 Bulletin 2023/42**

(21) Application number: **23155423.9**

(22) Date of filing: **07.02.2023**

(51) International Patent Classification (IPC):
***C25B 1/04*** *(2021.01)* ***C25B 9/70*** *(2021.01)*
***C25B 15/023*** *(2021.01)*

(52) Cooperative Patent Classification (CPC):
**C25B 1/04; C25B 9/70; C25B 15/023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 JP 2022067535**

(71) Applicant: **Hitachi, Ltd.**
**Tokyo 100-8280 (JP)**

(72) Inventors:
- **WATANABE, Keiji**
  **Tokyo, 100-8280 (JP)**
- **FURUTA, Futoshi**
  **Tokyo, 100-8280 (JP)**

(74) Representative: **Mewburn Ellis LLP**
**Aurora Building**
**Counterslip**
**Bristol BS1 6BX (GB)**

# (54) HYDROGEN PRODUCTION SYSTEM, HYDROGEN PRODUCTION METHOD

(57) An objective of the present disclosure is to achieve both of suppressing deterioration of water electrolysis stacks and hydrogen production efficiency. A hydrogen production system according to the present disclosure configures, according to deterioration characteristic of a water electrolysis stack, an electric current upper limit that is capable of suppressing deterioration of the water electrolysis stack, and controls an electric power distribution to the water electrolysis stack based on the electric current upper limit and on an estimated result of hydrogen production efficiency.

FIG. 14

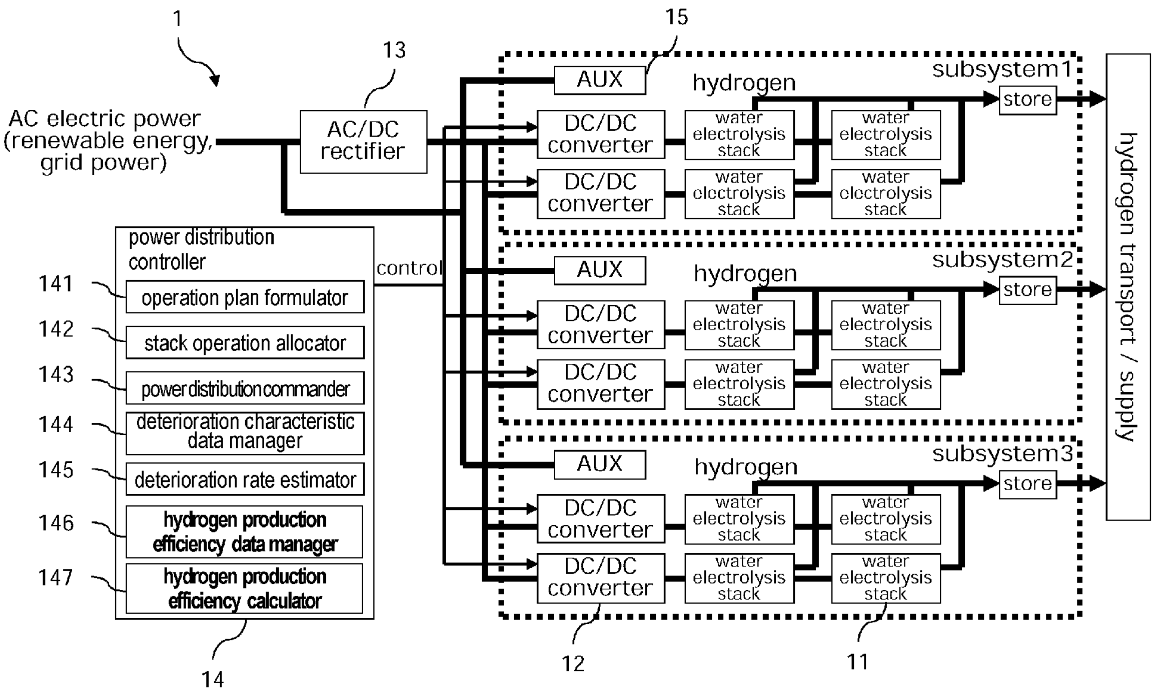


EP 4 261 325 A2

## Description

Technical Field

This disclosure relates to a hydrogen producing system that produces hydrogen by a plurality of water electrolysis stacks.

Background Art

For the sake of expanding use of hydrogen energy, it is required to reduce costs of hydrogen. In order to reduce hydrogen costs, it is necessary to reduce costs for producing hydrogen. Hydrogen is produced by methods such as water electrolysis. Costs for producing hydrogen are roughly categorized into capital expense (CAPEX) and operating expense (OPEX). OPEX consists of such as procurement cost for electric power used for water electrolysis, system maintenance cost, and the like. In order to reduce CAPEX, approaches such as below are necessary.

- reducing equipment costs
- improving equipment operation rate (increasing amount of hydrogen production)
- improving equipment lifetime (reducing equipment amortization expense)

In recent years, it is drawing attention to produce hydrogen utilizing renewable energy. However, the amount of electric power generation from renewable energy varies by effects of wind power or weather. Thus it is a technical problem to improve operating rate of hydrogen producing equipment. As measures to solve such problem, it is conceivable to produce hydrogen after leveling electric power by rechargeable batteries. However, such measure increases equipment cost by introducing rechargeable batteries, which makes it difficult to reduce CAPEX. Accordingly, a technique is required that can reduce CAPEX without using rechargeable batteries. Under such circumstances, it is important to improve equipment lifetime among the approaches above.

In order to improve equipment lifetime of hydrogen producing system, it is necessary to suppress deterioration of water electrolysis cell, which is a component of the system. On the other hand, it is also important to improve electrolysis efficiency of water electrolysis stacks.

Patent Document 1 describes a technique for improving electrolysis efficiency of water electrolysis stacks. This documents describes a technical problem as : "To obtain the best electrolytic efficiency corresponding to the amount of electric power supplied from a voltage fluctuation power source", and also describes a solution to problem as : "The water electrolysis system 10 includes a water electrolysis device 14 and a power supply device 18 including a solar cell 16. The water electrolysis device 14 includes a plurality of water electrolysis stacks 40 a - 40 d and power regulators 42 a - 42 d connected to each of the water electrolysis stacks 40 a - 40 d to enable the water electrolysis stack 40 a - 40 d to be operated at best efficiency by individually adjusting the power supplied from the solar cell 16" (refer to Abstract).

The Non-Patent Document 1 describes an operation method of water electrolysis system where the number of water electrolysis stacks operating in parallel is gradually increased as the electric power inputted into the water electrolysis system is increased.

JP patent application No. 2021-023663 is a prior patent application (hereinafter, referred to as "prior application") by the inventors of the present application. The prior application describes a method for suppressing deterioration of water electrolysis stacks by controlling electric power distributed among the water electrolysis stacks.

Citation List

Patent Document

Patent Document 1 : JP 2007-031813 A

Non-patent document

Non-Patent document 1 : B. Flamm et al., Applied Energy 281, 116031 (2021).

Summary of Invention

Technical Problem

As described later, the techniques described in Patent Document 1 and Non-Patent Document 1 both have high efficiency of hydrogen production. However, those techniques still have margin for improving deterioration of water electrolysis stacks. On the other hand, the prior application is suitable for suppressing deterioration of water electrolysis stacks, whereas the prior application still has margin for improving hydrogen production efficiency.

The present disclosure has been made in view of the above-mentioned problems. An objective of the present disclosure is to achieve both of suppressing deterioration of water electrolysis stacks and hydrogen production efficiency.

Solution to Problem

A hydrogen production system according to the present disclosure configures, according to deterioration characteristic of a water electrolysis stack, an electric current upper limit that is capable of suppressing deterioration of the water electrolysis stack, and controls an electric power distribution to the water electrolysis stack based on the electric current upper limit and on an estimated result of hydrogen production efficiency.

According to the hydrogen production system of the present disclosure, it is possible to achieve both of suppressing deterioration of water electrolysis stacks and hydrogen production efficiency. Other technical problems, configurations, or advantages of the present disclosure will be understood from the descriptions of embodiments below.

Brief Description of Drawings

Figure 1 is a configuration example of hydrogen production system used in a case study of a prior art.
Figure 2 illustrates a temporal variation of electric power inputted into the hydrogen production system of Figure 1.
Figure 3 illustrates a result of calculating hydrogen production efficiendy of the hydrogen production system of Figure 1.
Figure 4 illustrates a result of calculating a temporal variation of an operational state of a first stack in a subsystem 1.
Figure 5 represents the temporal variation of Figure 4 by frequency distribution.
Figure 6 illustrates a result of similarly calculating temporal variations of operational states of each stack.
Figure 7 illustrates a result of calculating a temporal variation of an operational state of a first stack in a subsystem 1.
Figure 8 represents the temporal variation of Figure 7 by frequency distribution.
Figure 9 illustrates a result of similarly calculating temporal variations of operational states of each stack.
Figure 10 illustrates a result of calculating a temporal variation of an operational state of a second stack (stack 1-2) in a subsystem 1.
Figure 11 represents the temporal variation of Figure 10 by frequency distribution.
Figure 12 illustrates a result of similarly calculating temporal variations of operational states of each stack.
Figure 13 illustrates a result of calculating deterioration suppressing effects and hydrogen production efficiencies of Patent Document 1, Non-Patent Document 1, and the prior application respectively.
Figure 14 is a configuration diagram of a hydrogen production system 1 according to an embodiment 1.
Figure 15 illustrates a result of calculating a temporal variation of an operational state of a third stack in a subsystem 3.
Figure 16 represents the temporal variation of Figure 15 by frequency distribution.
Figure 17 illustrates a result of similarly calculating temporal variations of operational states of each stack in a case assigning operation-preferrerd stack and suspension-preferred stack.
Figure 18 illustrates a result of calculating deterioration suppressing effect and hydrogen production efficiency.
Figure 19 is a configuration diagram of a hydrogen production system 1 according to an embodiment 2.
Figure 20 is a configuration diagram of a hydrogen production system 1 according to an embodiment 3.
Figure 21 is a configuration diagram of a hydrogen production system 1 according to an embodiment 4.

Description of Embodiments

<Problem of Prior Art>

Before describing embodiments of the present disclosure, technical problems of prior arts will be described in the form of case study. Then configurations and operational sequences of a hydrogen production system of the present disclosure will be described.

Figure 1 is a configuration example of hydrogen production system used in a case study of a prior art. A hydrogen production system including six water electrolysis stacks is configured by connecting three subsystems in parallel each including two water electrolysis stacks connected in parallel. Each subsystem further includes auxiliary equipment 15 other than the water electrolysis stack.

Figure 2 illustrates a temporal variation of electric power inputted into the hydrogen production system of Figure 1. This data example is created by filtering, with upper limit of 900 kW, electric power generated by renewable energy.

Figure 3 illustrates a result of calculating hydrogen production efficiendy of the hydrogen production system of Figure 1. This example assumes that a rated capacity of one water electrolysis stack is 150 kW, and that one subsystem is configured for each of 150×2 = 300 kW. Each subsystem (stacks and auxiliary equipment) has a efficiency characteristic shown in Figure 3. In general, the water electrolysis stack has higher efficiency at low electric power side. The hydrogen production efficiency monotonically increases as the inputted electric power decreases. On the other hand, the auxiliary equipment has lower efficiency at low electric power side, and the efficiency curve is almost flat when the inputted electric power is above a certain value. The electric power inputted into the subsystem is provided to the water electrolysis stack and to the auxiliary equipment. Thus the system efficiency is a sum of those efficiencies. Accordingly, the system efficiency exibits a curve with a local maximum as shown in Figure 3.

Hereinafter, an overall hydrogen production efficiency of the system is calculated from an average efficiency of the three subsystems assuming the configurations of Figures 1-3. The method for operating the system is such as those described in Patent Document 1, i.e. an operational point is employed as long as possible where the hydrogen production efficiency of the subsystem is at a peak. As general rule, the electric power distribution is approximately even among the stacks. As shown in Figure 3, the maximum efficiency point is an operational point of approximately 15% of the rated output. This operational point is employed as long as possible. The number of operating water electrolysis stacks is determined as below.

$$(1)\ \text{in a case where electric power provided to the system} \leq 6 \times (\text{rated output}) \times 15\%$$

The number of operating stacks is (electric power) / (rated output × 15%). Each stack is operated at the maximum efficiency point.

$$(2)\ \text{in a case where electric power provided to the system} > 6 \times (\text{rated output}) \times 15\%$$

All stacks are operated. The electric power is evenly distributed to each stack.

Figure 4 illustrates a result of calculating a temporal variation of an operational state of a first stack in a subsystem 1. Figure 5 represents the temporal variation of Figure 4 by frequency distribution. As shown in Figures 4-5, the operational state goes back and forth between the intermediate output (i.e. maximum output) and the high output. This is an operational pattern that highly degrades the water electrolysis stack, as described in the prior application.

Figure 6 illustrates a result of similarly calculating temporal variations of operational states of each stack. The deterioration rate of stacks is categorized into three categories of "high deterioration", "middle deterioration", and "low deterioration". The figure also shows the category to which each stack belongs. An average deterioration rate in this example is at high value of 100 μV/h. Thus there is a problem in terms of suppressing deterioration. On the other hand, in terms of hydrogen production efficiency, the overall average efficiency of the system is calculated as 65.9%, which is derived by calculating an average of efficiencies of each subsystem weighted by electric power value. Since this example uses the maximum efficiency point highly frequently, this operational method has high efficiency.

In addition, assuming the operational method of Non-Patent Document 1, operational states of each stack are calculated. Non-Patent Document 1 describes an example of operating four stacks. This example is extended into six stacks. The operated stacks are designated as below.

(1) electric power 0 - 150 kW : only stack 101 is operated
(2) electric power 150 - 300 kW : stacks 1-1, 2-1 are operated (even distribution)
(3) electric power 300 - 450 kW : stacks 1-1, 2-1, 3-1 are operated (even distribution)
(4) electric power 450 - 600 kW : stacks 1-1, 2-1, 3-1, 3-2 are operated (even distribution)
(5) electric power 600 - 750 kW : stacks 1-1, 2-1, 2-2, 3-1, 3-2 are operated (even distribution)
(6) electric power above 750 kW : all stacks are operated (even distribution)

Figure 7 illustrates a result of calculating a temporal variation of an operational state of a first stack in the subsystem 1. Figure 8 represents the temporal variation of Figure 7 by frequency distribution. As shown in Figures 7-8, some stacks exibit frequent back and forth between high output and intermediate output. This is an operational pattern which degrades the water electrolysis stack significantly, as mentioned in the prior application. The average deterioration rate is 57.7 μV/h. The average hydrogen production efficiency is 65.4%. Compared to Patent Document 1, the deterioration is slightly improved but the efficiency is decreased.

Figure 9 illustrates a result of similarly calculating temporal variations of operational states of each stack. Similarly to Figure 6, the deterioration rate of stacks is categorized into three categories of "high deterioration", "middle deterioration", and "low deterioration". The figure also shows the category to which each stack belongs.

Furthermore, operations of each stack are calculated in a case where the operational method of the prior application is employed. In the prior application, the electric power inputted to the water electrolysis stack is controlled, and an operational pattern of low deterioration rate that hardly degrades the water electrolysis stack is preferentially assigned, thereby suppressing deterioration. An example will be described below, where "inoperation-preferred stack" and "suspension-preferred stack" described in the prior application are assigned.

Figure 10 illustrates a result of calculating a temporal variation of an operational state of a second stack (stack 1-2) in the subsystem 1. Figure 11 represents the temporal variation of Figure 10 by frequency distribution. As shown in Figures 10-11, the occurring frequency of intermediate output is decreased compared to Patent Document 1 and Non-Patent Document 1. A frequent back and forth is observed between high output and zero output. This is characteristic to low deterioration rate pattern. The average deterioration rate is at low value of 37.5 μY/h. On the other hand, as shown in Figure 3, high output and zero output are frequencly used. Thereby the low efficiency region in the efficiency characteristic is frequently used, resulting in average efficiency of 63.5 %. This efficiency is lower than that of Patent Document 1 and Non-Patent Document 1. Therefore, in terms of important point for employing the prior application, it has become clear that frequently using high output and zero output for suppressing deterioration may decrease hydrogen production efficiency than prior arts.

Figure 12 illustrates a result of similarly calculating temporal variations of operational states of each stack. Similarly to Figure 6, the deterioration rate of stacks is categorized into three categories of "high deterioration", "middle deterioration", and "low deterioration". The figure also shows the category to which each stack belongs.

Figure 13 illustrates a result of calculating deterioration suppressing effects and hydrogen production efficiencies of Patent Document 1, Non-Patent Document 1, and the prior application respectively. The horizontal axix represents a reciprocal of voltage deterioration rate. The vertical axix represents an average value of hydrogen production efficiency. As shown in the graph, those prior arts have a trade off between suppressing deterioration and hydrogen production efficiency. Thus it is an objective of the present disclosure to achieve both suppressing deterioration of water electrolysis stack and hydrogen production efficiency. Specifically, on the basis of the concept of the prior application for suppressing deterioration, it is an objective to find a method for distributing electric power that can suppress decrease in hydrogen production efficiency.

<Embodiment 1>

Figure 14 is a configuration diagram of a hydrogen production system 1 according to an embodiment 1 of the present disclosure. The hydrogen production system 1 is a system that produces hydrogen using renewable energy or alternating current (AC) power supplied by a power transmission and distribution system. The hydrogen production system 1 produces hydrogen by operating water electrolysis stacks 11 using the supplied power. The hydrogen production system 1 includes the water electrolysis stacks 11, DC/DC converters 12, an AC/DC rectifier 13, and a power distribution controller 14.

The water electrolysis stacks 11 produce hydrogen by electrolyzing water. In Figure 14, two water electrolysis stacks 11 are connected in series (which is referred to as serial unit), the two water electrolysis stacks 11 are paired, and two pieces of the pair are connected in parallel, thereby forming a subsystem. The hydrogen produced by the water electrolysis stacks 11 is outputted to transportation equipment and storage equipment.

The AC/DC rectifier 13 converts the AC power supplied to the hydrogen production system 1 into direct current (DC) power and outputs the converted power to the DC/DC converters 12. The DC/DC converters 12 supply power to the water electrolysis stacks 11 to control the operation states of the water electrolysis stacks 11.

The power distribution controller 14 outputs an operation command to the DC/DC converters 12 to control the operation states of the water electrolysis stacks 11 via the DC/DC converters 12. The power distribution controller 14 includes an operation plan formulator 141, a stack operation allocator 142, a power distribution commander 143, a deterioration characteristic data manager 144, a deterioration rate estimator 145, a hydrogen production efficiency data manager 146, and a hydrogen production efficiency calculator 147.

The operation plan formulator 141 formulates an operation rotation plan for the water electrolysis stacks 11. The operation rotation as used herein is an order of allocating one of an inoperation-preferred stack or a suspension-preferred stack, which will be described below, as the operation state of each water electrolysis stack 11. The stack operation allocator 142 determines the operation state of each water electrolysis stack 11 according to the operation rotation plan formulated by the operation plan formulator 141. The power distribution commander 143 gives current command values to the DC/DC converters 12 such that the water electrolysis stacks 11 operate according to their operation states.

The deterioration characteristic data manager 144 holds deterioration characteristic data describing the deterioration characteristics of the water electrolysis stacks 11. The operation plan formulator 141 can formulate an operation rotation plan according to these deterioration characteristics. The deterioration rate estimator 145 estimates the deterioration rate of each water electrolysis stack 11 assuming that the water electrolysis stack 11 is operated according to the plan.

The hydrogen production efficiency data manager 146 holds hydrogen production efficiency data describing hydrogen production efficiency of the water electrolysis stack 11. The hydrogen production efficiency data describes a relationship between electric power inputted to the water electrolysis stack 11 and the hydrogen production efficiency of the water electrolysis stack 11, such as shown in Figure 3. The hydrogen production efficiency calculator 147 calculates the hydrogen production efficiency of the water electrolysis stack 11 based on the hydroen production efficiency data.

The power distribution controller 14 determines electric power distribution to each of the water electrolysis stacks 11 using both the result of calculating the deterioration rate of the water electrolysis stack 11 and the result of calculating hydrogen production efficiency data. This embodiment focuses on, within the output range of the water electrolysis stack 11, an output area which has high hydrogen production efficiency and low deterioration rate. This embodiment actively utilizes such output area to control the electric power distribution. Specific methods for distribution will be described later. Some of operational theory described in the prior application may be omitted.

In the efficiency characteristic shown in Figure 3, the hydrogen production efficiency reaches maximum at rated output × 15%. The hydrogen production efficiency exibits high efficiency from low output area to intermediate output area. On the other hand, as described in the prior application, the deterioration is small when operating at or below 1/2 of the rated output. Accordingly, it is contemplated that the output range at or below 1/2 of the rated output has high hydrogen production efficiency and low deterioration rate. This embodiment actively uses such output area to control the electric power distribution. Specifically, it is contemplated that the power distribution controller 14 may distribute the electric power as below.

(1) The number of operating stacks = (electric power inputted to the hydrogen production system 1) / (rated output of serial unit) × 2. If a fraction occurs by this equation, the number of operating stacks may be rounded up or down to the closest interger value. Within the output range of the number of operating stacks, the input electric power is evenly distributed to each of the serial units. Each water electrolysis stack forming one serian unit basically performs a same operation (however, there exists slight differences depending on difference of state of health described later).

(2) If the input electric power is large and it is difficult to distribute the electric power in accordance witrh the equation above, the electric power is distributed for preferentially suppressing deterioration, in which "inoperation-preferred stack" and "suspension-preferred stack" are assigned as in the prior application. The inoperation-preferred stack is a stack to which the electric power is preferentially distributed compared to other water electrolysis stacks 11. The suspension-preferred stack is a stack whose power supply is preferentially stopped compared to other water electrolysis stacks 11. A similar operational mode may be assigned for each of the serial units. In this case, one of "inoperation-preferred serial unit (large distribution serial unit)" or "suspension-preferred serial unit (small distribution serial unit)" is assigned to each of the serial units.

Each of the serial units is typically connected to a DC bus. The voltage on the DC bus is at same level. Accordingly, a same DC bus voltage is supplied to each serial unit. Thus the input voltage to the serial unit is controlled by the input electric current flowing to the serial unit. In other words, in order to operate the serial unit within output range at or below 1/2 of rated output of serial unit, an input current is supplied to the serial unit at or below an upper limit which is calculated by dividing 1/2 of the rated output of the serial unit by the DC bus voltage.

According to above, as long as the electric power inputted to the hydrogen production system 1 is at or below (upper limit of input current to serial unit) × (operation voltage of serial unit at that current) × number of connected serial unit in parallel, the number of operating stacks = (electric power inputted to the hydrogen production system 1) / (upper limit of input current to serial unit × operation voltage of serial unit at that current), or an integer value calculated by rounding up or down the equation. If the input electric power is above the equation, the operation (2) above is performed to prioritize suppressing deterioration.

The order for assigning inoperation-preferred stack and suspension-preferred stack may be different for each of serial units. For example, a first serial unit of subsystem 1 operates as a inoperation-preferred stack during 00:00-06:00, and then operates as a suspension-preferred stack during 06:00-12:00. A second serial unit of subsystem 1 oeprates as a suspension-preferred stack during 00:00-06:00, and then operates as a inoperation-preferred stack during 06:00-12:00. This achieves balancing hydrogen production efficiency or the like between serial units.

Figure 15 illustrates a result of calculating a temporal variation of an operational state of a third stack in a subsystem 3. Figure 16 represents the temporal variation of Figure 15 by frequency distribution. The number of operating stacks is configured as "(input electric power) / (rated output of stack) ×2". As a result, the proportion of operating at or below 1/2 of rated output is increased compared to the prior application. When operating at high output, an inoperation-preferred stack and a suspension-preferred stack are assigned, thereby operating in low deterioration pattern of "back and forth between high output and zero output" as in the prior application. According to those operations, the average deterioration rate is at low value of 42 μV/h. The average hydrogen production efficiency is 65.8 % as a result of increasing the frequency for using the high efficiency area within at or below 1/2 of rated output. This efficiency is approximately as high as that of Patent Document 1. Accordingly, the method of distributing electric power in this embodiment exibits that it is possible to operate the system with low deterioration as well as high efficiency.

Figure 17 illustrates a result of similarly calculating temporal variations of operational states of each stack in a case assigning inoperation-preferrerd stack and suspension-preferred stack. Similarly to Figure 6, the deterioration rate of stacks is categorized into three categories of "high deterioration", "middle deterioration", and "low deterioration". The figure also shows the category to which each stack belongs.

Figure 18 illustrates a result of calculating deterioration suppressing effect and hydrogen production efficiency. It is difficult to achieve both suppressing deterioration and hydrogen production efficiency in Patent Document 1, Non-Patent Document 1, and the prior application. As shown in Figure 18, it is possible in this embodiment to achieve highly durable and highly efficient operation.

<Embodiment 1 : summary>

The hydrogen production system 1 according to the embodiment 1 uses an electric current upper limit that is capable of suppressing deterioratuion of the water electrolysis stack 11, and also uses an output range calculated by the hydrogen production efficiency calculator 147 where the production efficiency is high. Accordingly, it is possible to achieve both suppressing deterioration of water electrolysis stack and hydrogen production efficiency.

The hydrogen production system 1 according to the embodiment 1 switches, depending on the magnitude of input electric power, between (1) an operational mode that achieve both suppressing deterioration and hydrogen production efficiency, and (2) an operational mode prefering deterioration suppression. Accordingly, it is possible to efficiently achieve both suppressing deterioration and hydrogen production efficiency, even when using a power supply whose electric power temporally fluctuates significantly such as in the case of renewable energy.

<Embodiment 2>

Figure 19 is a configuration diagram of the hydrogen production system 1 according to an embodiment 2 of the present disclosure. In the second embodiment, in addition to the configuration described in the first embodiment, a power generation amount estimator 21 is provided. The power generation amount estimator 21 may be configured as a part of the hydrogen production system 1 or may be configured as a functional unit separate from the hydrogen production system 1.

The power generation amount estimator 21 predicts the amount of power generation of renewable energy according to a known method. For example, the following may be considered: (a) prediction using meteorological data 22 (data describing meteorological conditions such as weather, wind conditions, and the like); (b) data acquisition on amount of power generation from renewable energy power generation facilities in real time; and (c) a combination of these, and the like.

The power distribution controller 14 receives the predicted amount of power generation from the power generation amount estimator 21, and accordingly allocates the operation state of each water electrolysis stack 11. For example, when the amount of power generation is large, the number of inoperation-preferred stacks is increased. This is because there is a concern that, when the amount of power generation is increased while maintaining the number of stacks, the power distributed to the suspension-preferred stack is increased and the transition between the high power and the intermediate power is increased, which will result in accelerated deterioration. When the power generation is small, the subsystem is turned OFF including the auxiliary equipment 15, thereby suppressing power consumption. It is preferable to turn OFF the subsystem one by one such that the power consumption of hydrogen production system 1 is smaller than the electric power inputted to the hydrogen production system 1. However, it is impractical to turn OFF the subsystem every time when instantaneous decrease in input power occurs. For example, it is appropriate to turn OFF the subsystem if the duration where the input power is below a reference value is at or longer than a threshold.

<Embodiment 3>

Figure 20 is a configuration diagram of the hydrogen production system 1 according to an embodiment 3 of the present disclosure. In the third embodiment, in addition to the configuration described in the first embodiment, a deterioration monitor 3 is provided. The deterioration monitor 3 may be configured as a part of the hydrogen production system 1 or may be configured as a functional unit separate from the hydrogen production system 1.

For example, the deterioration monitor 3 receives an output current and an output voltage of the water electrolysis stacks 11 from the power distribution controller 14, and uses the same to calculate the state of health (SOH) of the water electrolysis stacks 11. The power distribution controller 14 allocates the operation state of each water electrolysis stack 11 according to the state of health thereof. The deterioration monitor 3 also monitors such as power consumption of auxiliary equipment 15, amount of hydrogen production of hydrogen production system 1.

For example, the power distribution controller 14 allocates the operation state such that, for the water electrolysis stack 11 having a reduced SOH, the number of times to perform an operation with a larger deterioration rate as compared with the other water electrolysis stacks 11 (e.g. frequent back and forth between high output and intermediate output) is reduced. As a result, it is possible to avoid a situation in which only a specific stack is degraded at an early stage and needs to be replaced, so that the maintenance cost associated with the replacement can be reduced.

The hydrogen production efficiency calculator 147 may correct the calculated result of hydrogen production efficiency according to the calculated result of state of health by the deterioration monitor 3. For example, the estimated result is corrected downward (production efficiency is estimated lower) for stacks with progressed deterioration. Specifically, for stacks (or serial units) with state of health of below threshold, the efficiency characteristic of Figure 3 is acquired again, and the hydrogen production efficiency can be recalculated according to the efficiency characteristic which is acquired again. The efficiency characteristic of Figure 3 may be prepared in advance for each values of state of health, or may be acquired again by actually measuring the efficiency characteristic using the subsystem operating in maintenance mode.

The hydrogen production efficiency calculator 147 may acquire temporal variation of power consumption of the auxiliary equipment 15, and then correct the calculated result of hydrogen production efficiency accordingly. For example, during time periods where the power consumption of auxiliary equipment 15 is large, the electric power provided to the water electrolysis stack 11 is decreased. The calculated result of hydrogen production efficiency may be corrected according to such decrease. Specifically, among the efficiency characteristic of subsystem shown in Figure 3, the component corresponding to the relationship between the auxiliary equipment 15 and its power consumption is varied. The efficiency characteristic of Figure 3 is acquired again accordingly, and hydrogen production efficiency may be recalculated according to the efficiency characteristic which is acquired again.

<Embodiment 4>

Figure 21 is a configuration diagram of a hydrogen production system 1 according to an embodiment 4 of the present disclosure. In the fourth embodiment, in addition to the configuration described in the first embodiment, a management system 41 and a distributor 42 are provided. The management system 41 and the distributor 42 may be configured as parts of the hydrogen production system 1 or may be configured as functional units separate from the hydrogen production system 1.

According to the present embodiment, the distributor 42 switches between supplying the power generated by a renewable energy power generation facility 43 to the water electrolysis stacks 11 and selling the power to a consumer 44 (that is, outputting the received power to the power transmission and distribution system), according to instruction from the management system 41. For example, the management system 41 instructs the distributor 42 on a distribution ratio between the two options.

The management system 41 further collects demand data for various energies (for example, power, heat, hydrogen, and the like) from the consumer 44, and controls the energy distribution according to the data. For example, it is possible to carry out controlling, such as predicting the power demand and a spot price of energy that reflects the same, increasing a power selling ratio when the power demand is large, producing hydrogen when the power demand is low, and the like. Data for the supply amount of these energies may also be collected, and the controlling described above may be performed according to the balance between supply and demand.

When the amount of power supplied to the hydrogen production system 1 is large, the number of stacks that can be allocated as the suspension-preferred stack is decreased relatively. In such a case, the distributor 42 may increase the ratio of selling power to the consumer 44 (in other words, when the amount of power generation is decreased, the ratio of selling power is decreased accordingly). As a result, since the power supplied to the water electrolysis stack 11 is reduced, the number of stacks that can be allocated as the suspension-preferred stack is increased. As a result, deterioration of the water electrolysis stacks 11 can be restrained. At this time, it is preferred for the power distribution controller 14 to perform the power distribution as described in the embodiment 1, thereby creating an operation rotation plan such that each stack is operated within output range of high efficiency and low deterioration.

<Modified Examples of Present Disclosure>

The present disclosure is not limited to the embodiments described above, and includes various modified examples. For example, the embodiments described above are described in detail in order to explain the present disclosure in an easy-to-understand manner, and are not necessarily limited to those having all the configurations described above. Further, a part of the configuration of an embodiment can be replaced with the configuration of another embodiment, and the configuration of another embodiment can be added to the configuration of an embodiment. In addition, it is possible to add, delete, and replace other configurations for a part of the configuration of each embodiment.

In the embodiments described above, the power distribution controller 14 and each functional unit thereof can be configured by hardware such as a circuit device that implements these functions and the like, or can be configured by executing software that implements these functions by a computing unit such as a processor or the like. The same applies to the power generation amount estimator 21, the deterioration monitor 3, and the management system 41.

List of reference signs

1 : hydrogen production system
11 : water electrolysis stack
12 : DC/DC converter
13 : AC/DC rectifier
14 : power distribution controller
21 : power generation amount estimator
3 : deterioration monitor
41 : management system

## Claims

**1.** A hydrogen production system that produces hydrogen using a plurality of water electrolysis stacks, comprising:

a power converter that controls an electric power supplied to the water electrolysis stack; and
a power distribution controller that controls an electric power distributed to each of the water electrolysis stacks by controlling the power converter,
wherein the power distribution controller further comprises:

a deterioration rate calculator that holds a deterioration characteristic indicating easiness of deterioration of the water electrolysis stack; and
a hydrogen production efficiency calculator that estimates a hydrogen production efficiency of the water electrolysis stack,

wherein the power distribution controller controls a power distribution to the water electrolysis stack, based on an electric current upper limit configured by the deterioration characteristic, the upper limit suppressing deterioration of the water electrolysis stack, and on an estimated result by the hydrogen production efficiency calculator.

**2.** The hydrogen production system according to claim 1, further comprising a number of serial units connected in parallel, the serial unit being formed by serially connecting one or more of the water electrolysis stacks, wherein

if an electric power provided to the hydrogen production system is at or below

$$\text{(the electric current upper limit)} \times \text{(an operational voltage of the serial unit at the electric current upper limit)} \times \text{(a number of parallel connection of the serial units)},$$

then the power distribution controller provides an electric power to a parallel connection number of the serial unit connected in parallel among the plurality of water electrolysis stacks, the parallel connection number being derived by rounding up into a closest integer a number of

(electric power provided to the hydrogen peoduction system) / ((the electric current uppwer limit) × (an operational voltage of the serial unit at the electric current upper limit)).

3. The hydrogen production system according to claim 1, further comprising a number of serial units connected in parallel, the serial unit being formed by serially connecting one or more of the water electrolysis stacks,

wherein the power distribution controller comprises an operation plan formulator that formulates an operation rotation plan of the water electrolysis stack,
wherein the power distribution controller comprises a stack operation allocator that assigns an operational state of the water electrolysis stack in the operation rotation plan,
wherein
if an electric power provided to the hydrogen production system exceeds

(the electric current upper limit) × (an operational voltage of the serial unit at the electric current upper limit) × (a number of parallel connection of the serial units),

then the stack operation allocator assigns, as an operational state of the serial unit, one of

a large distribution serial unit that receives a power distribution larger than other one of the serial unit for a predetermined time period;
a small distribution serial unit that receives a power distribution smaller than other one of the serial unit for a predetermined time period.

4. The hydrogen production system according to claim 3,

wherein the stack operation allocator sequentially assigns, as an operational state of a first serial unit among the plurality of the serial units in the operation rotation plan, the large distribution serial unit and the small distribution serial unit in a first sequence, and
wherein the stack operation allocator sequentially assigns, as an operational state of a second serial unit different from the first serial unit among the plurality of the serial units in the operation rotation plan, the large distribution serial unit and the small distribution serial unit in a second sequence different from the first sequence.

5. The hydrogen production system according to claim 1,

wherein the water electrolysis stack receives an electric power from a variable power source whose electric power value temporally varies,
wherein the power distribution controller receives a result of estimating an amount of power generation of the variable power source, and
wherein the power distribution controller controls a power distribution to the water electrolysis stack according to the estimated amount of power generation.

6. The hydrogen production system according to claim 5,

wherein the hydrogen production system comprises a number of serial units connected in parallel, the serial unit being formed by serially connecting one or more of the water electrolysis stacks,
wherein the hydrogen production system comprises one or more subsystems configured by one or more of the serial units and auxiliary equipment which is necessary for operating the serial unit, and
wherein if the estimated amount of power generation is at or below a predetermined reference power generation for a predetermined time period, the power distribution controller stops power supply to the subsystem one by one such that a power consumption of the hydrogen production system is at or below the estimated amount of power generation.

**7.** The hydrogen production system according to claim 1,

wherein the power distribution controller acquires a state of health of the water electrolysis stack, and
wherein the power distribution conttoller assigns an operational state of the water electrolysis stack according to the acquired state of health.

**8.** The hydrogen production system according to claim 7,

wherein if the acquired state of health is below a reference value, the hydrogen production efficiency calculator acquires again data describing a relationship between a hydrogen production efficiency of the water electrolysis stack and an input electric power to the water electrolysis stack, and
wherein the hydrogen production efficiency calculator estimates again a hydrogen production efficiency of the water electrolysis stack according to the data acquired again.

**9.** The hydrogen production system according to claim 8,

wherein the power distribution controller acquires a temporal variation of power consumption of auxiliary equipment of the water electrolysis stack, and
wherein the hydrogen production efficiency calculator corrects an estimated result of the hydrogen production efficiency according to the acquired temporal variation of power consumption.

**10.** The hydrogen production system according to claim 5, further comprising:

a distributor that switches between supplying a supplied power, which is supplied from the variable power source, to the water electrolysis stacks, and outputting the same to a power transmission and distribution system; and
a management system in which the distributor controls a ratio of distributing the supplied power to the water electrolysis stack and to the power transmission and distribution system according to a power demand.

**11.** The hydrogen production system according to claim 10,

wherein the power distribution controller receives a result of estimating an amount of power generation of the variable power source,
wherein when the estimated amount of power generation is a first amount of power generation, the management system controls the distributor so as to output a first ratio of the supplied power to the power transmission and distribution system, and
wherein when the estimated amount of power generation is a second amount of power generation that is smaller than the first amount of power generation, the management system controls the distributor so as to output a second ratio of the supplied power that is smaller than the first ratio to the power transmission and distribution system.

**12.** The hydrogen production system according to claim 10,

wherein when the power demand is a first electric power, the management system controls the distributor so as to output a first ratio of the supplied power to the power transmission and distribution system, and
wherein when the power demand is a second electric power that is smaller than the first electric power, the management system controls the distributor so as to output a second ratio of the supplied power that is smaller than the first ratio to the power transmission and distribution system.

**13.** The hydrogen production system according to claim 10, wherein the management system controls the ratio according to a heat demand, a supply amount of heat to be supplied according to the heat demand, a hydrogen demand, and a supply amount of hydrogen to be supplied by the hydrogen production system.

**14.** The hydrogen production system according to claim 1, wherein the hydrogen production system provides an electric power supplied from a renewable energy to the water electrolysis stack.

**15.** A hydrogen production method that produces hydrogen using a plurality of water electrolysis stacks, comprising:

controlling a power converter that controls an electric power supplied to the water electrolysis stack, thereby controlling an electric power distributed to each of the water electrolysis stacks,
wherein controlling the power converter controls an electric power distributed to each of the water electrolysis stacks based on : an estimated deterioration of the water electrolysis stack calculated from a deterioration characteristic indicating easiness of deterioration of the water electrolysis stack; an electric current upper limit configured by the deterioration characteristic, the upper limit suppressing deterioration of the water electrolysis stack; and an estimated hydrogen production efficiency of the water electrolysis stack.

FIG. 1

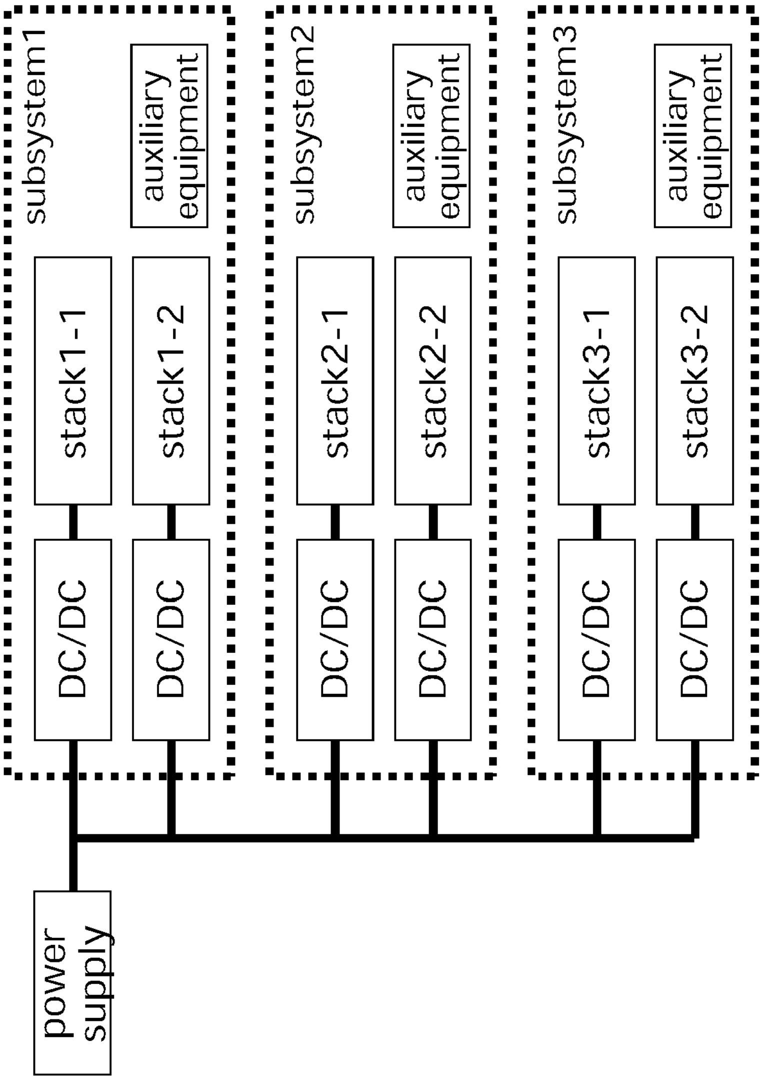
subsystem1
auxiliary equipment
stack1-1
stack1-2
DC/DC
DC/DC
subsystem2
auxiliary equipment
stack2-1
stack2-2
DC/DC
DC/DC
subsystem3
auxiliary equipment
stack3-1
stack3-2
DC/DC
DC/DC
power supply

FIG. 2

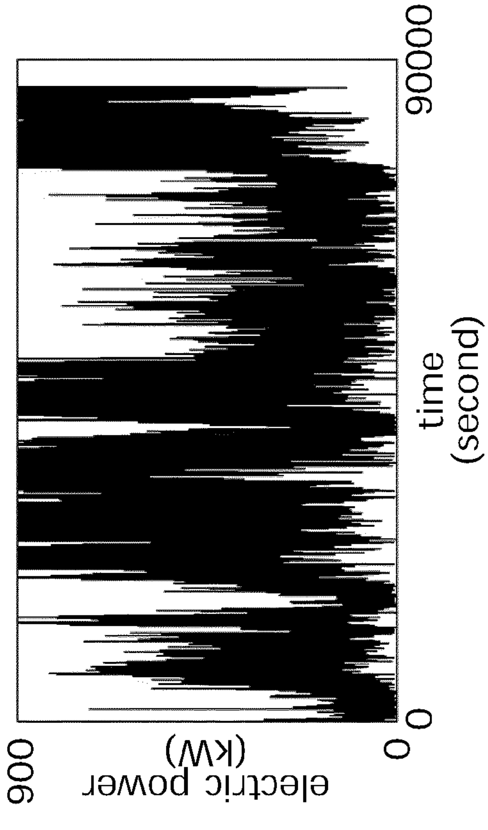
900
electric power
(kW)
0
0
90000
time
(second)

FIG. 3

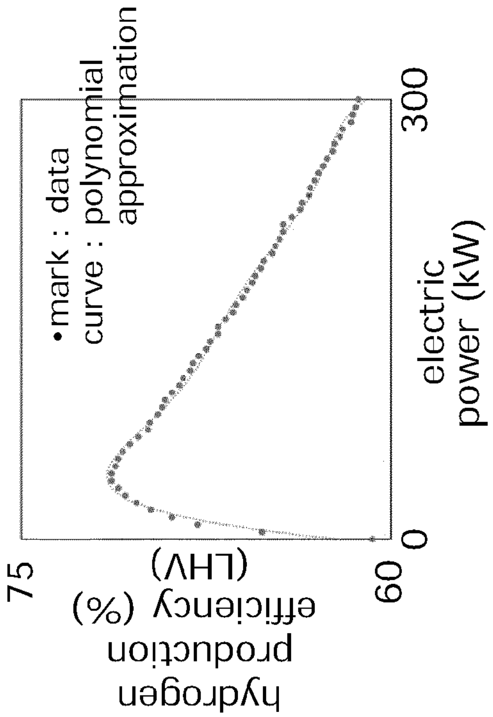
75
hydrogen
production
efficiency (%)
(LHV)
60
0
300
electric
power (kW)
•mark : data
curve : polynomial
approximation

FIG. 4

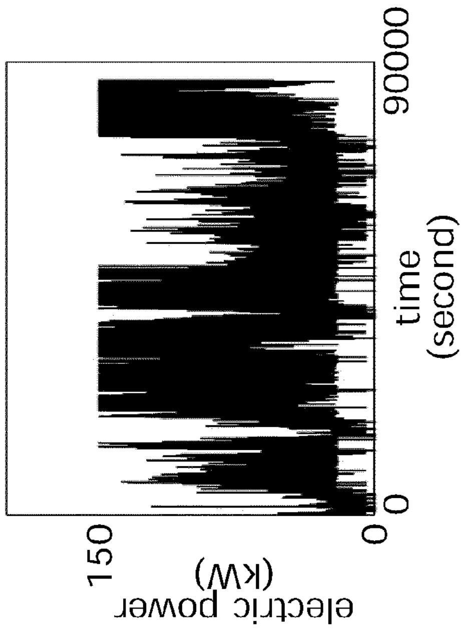
150
0
electric power
(kW)
0
90000
time
(second)

FIG. 5

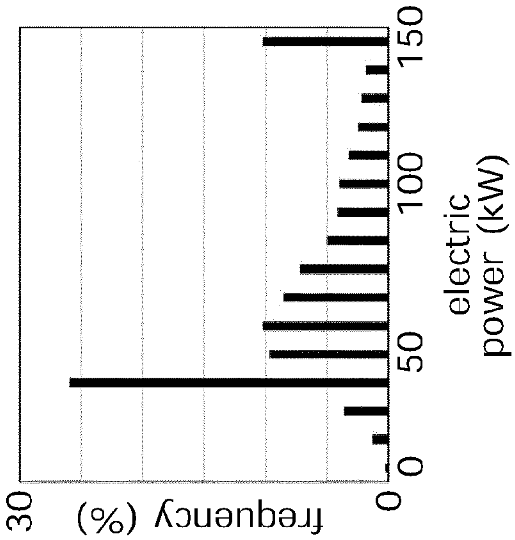
30
0
frequency (%)
0
50
100
150
electric
power (kW)

FIG. 6

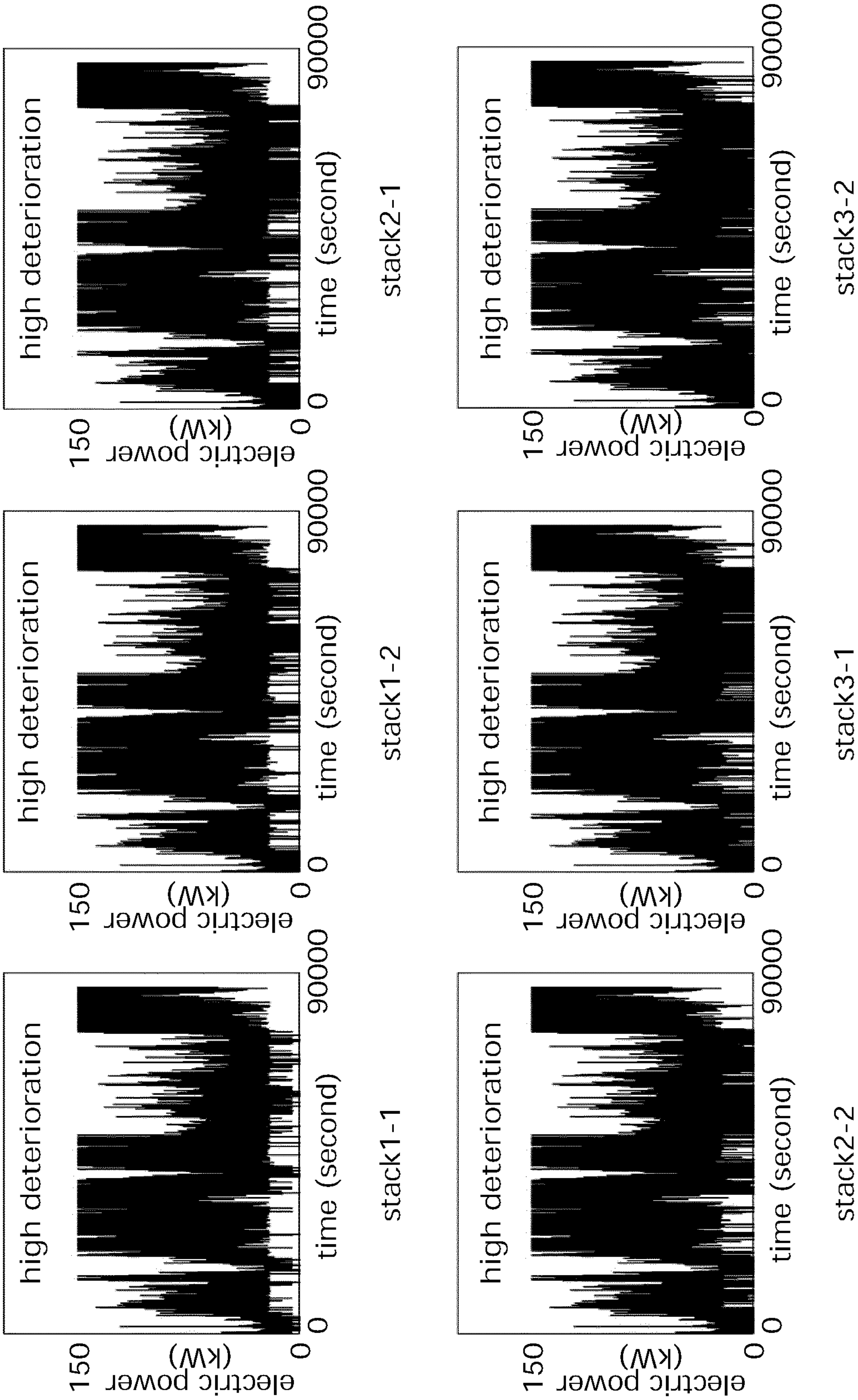
high deterioration
electric power (kW)
150
0
time (second)
0
90000
stack1-1
stack1-2
stack2-1
stack2-2
stack3-1
stack3-2

FIG. 7

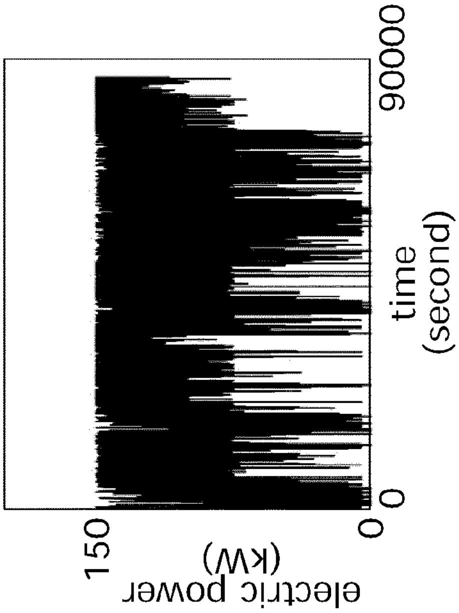
electric power (kW)
150
0
0
90000
time (second)

FIG. 8

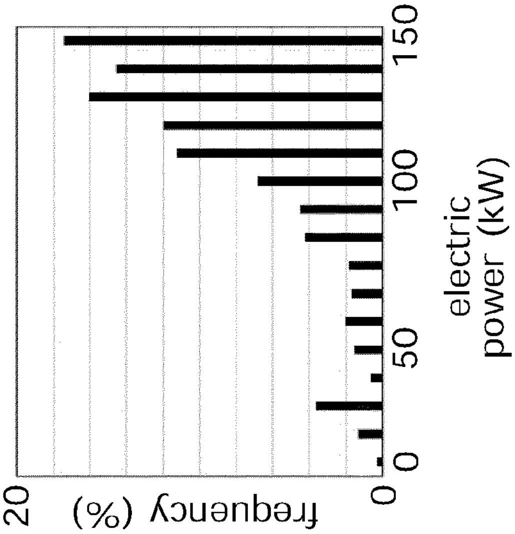
frequency (%)
20
0
0
50
100
150
electric power (kW)

FIG. 9

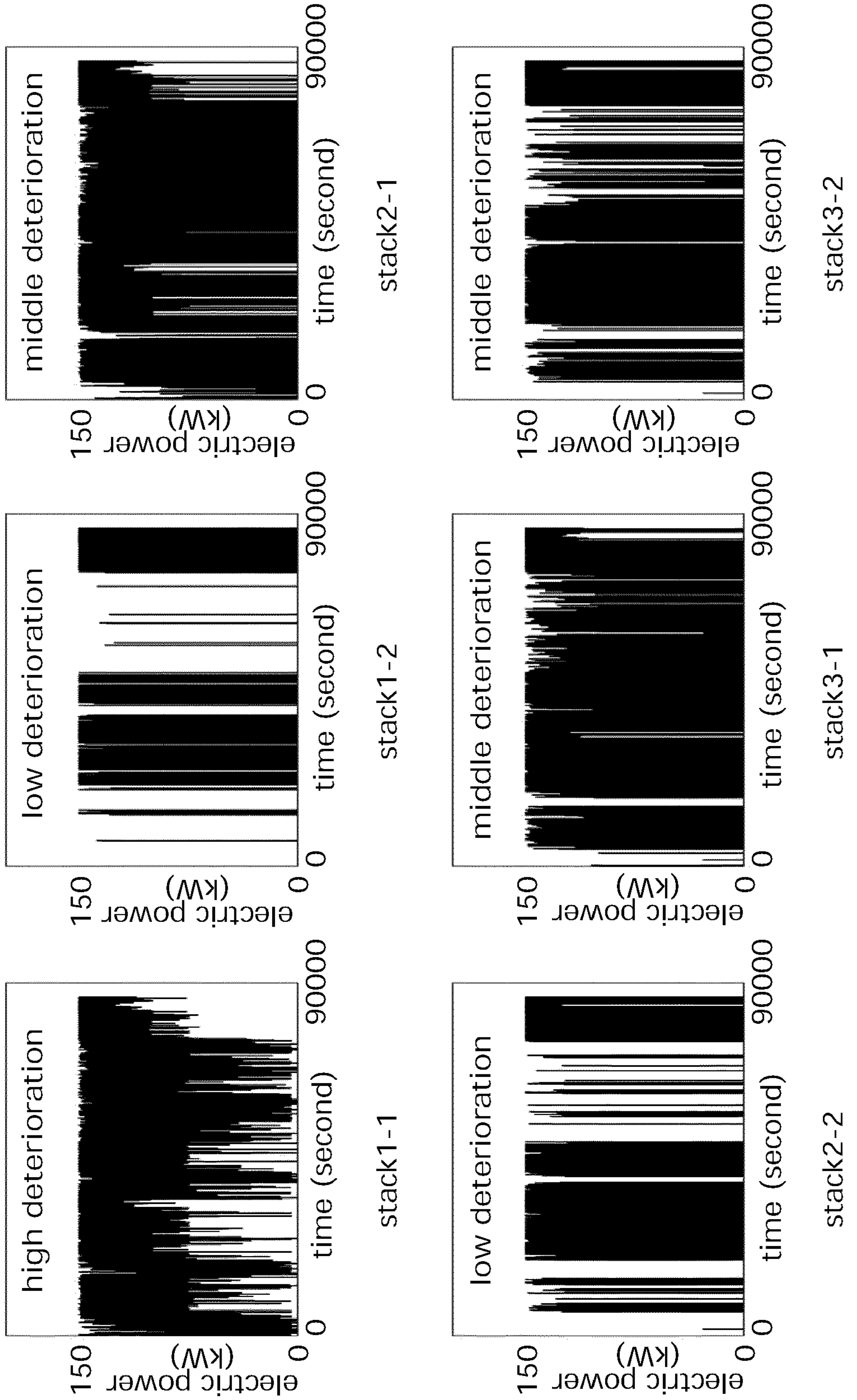
high deterioration
low deterioration
middle deterioration
low deterioration
middle deterioration
middle deterioration
electric power (kW)
150
0
90000
time (second)
stack1-1
stack1-2
stack2-1
stack2-2
stack3-1
stack3-2

FIG. 10

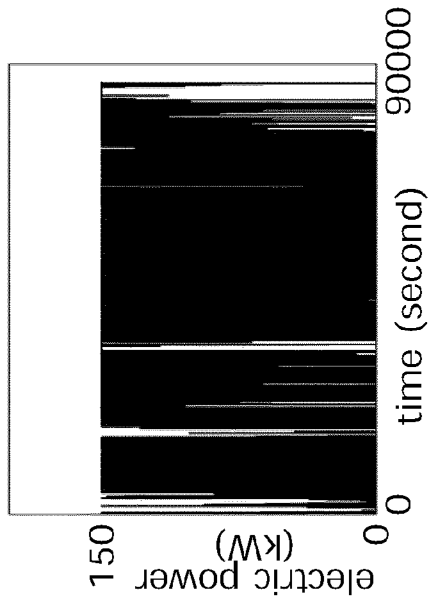
150
electric power
(kW)
0
0
90000
time (second)

FIG. 11

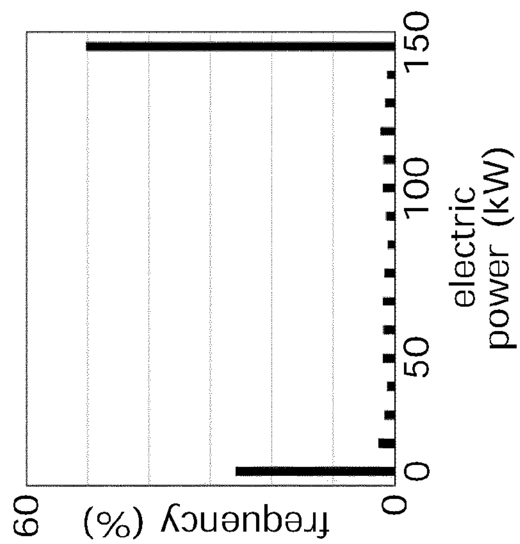
60
frequency (%)
0
0
50
100
150
electric
power (kW)

FIG. 12

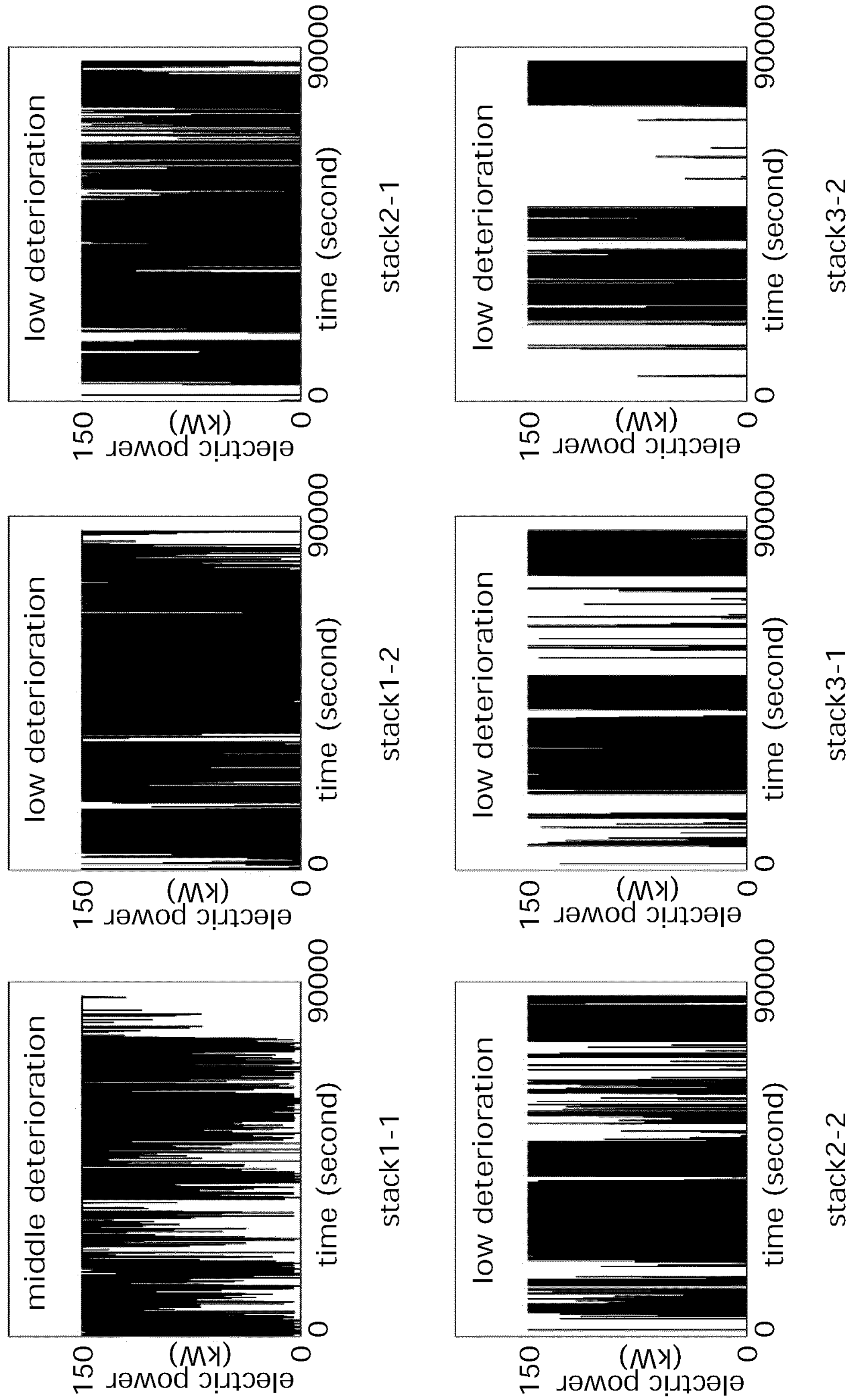
middle deterioration
electric power (kW)
150
0
0
90000
time (second)
stack1-1
low deterioration
stack1-2
low deterioration
stack2-1
low deterioration
stack2-2
low deterioration
stack3-1
low deterioration
stack3-2

FIG. 13

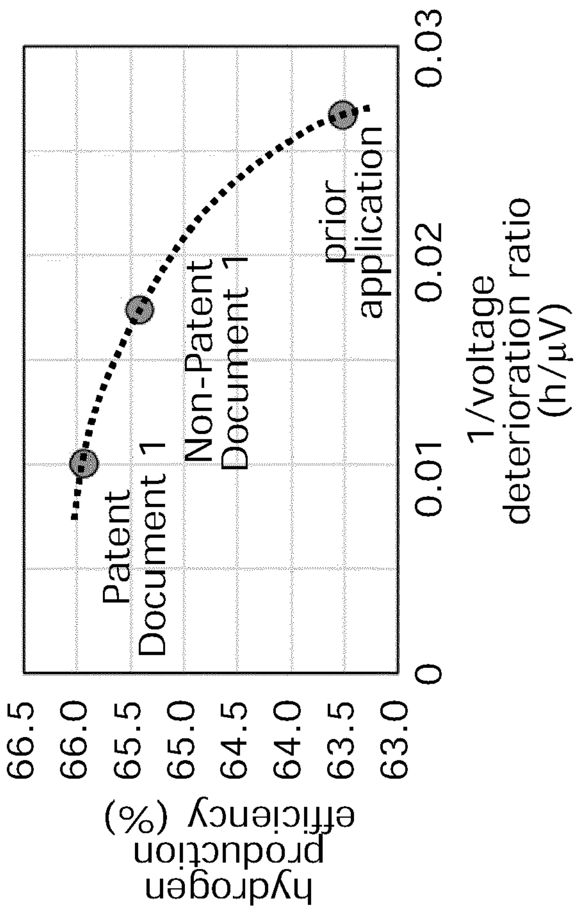
hydrogen production efficiency (%)
66.5
66.0
65.5
65.0
64.5
64.0
63.5
63.0
0
0.01
0.02
0.03
1/voltage deterioration ratio (h/μV)
Patent Document 1
Non-Patent Document 1
prior application

FIG. 14

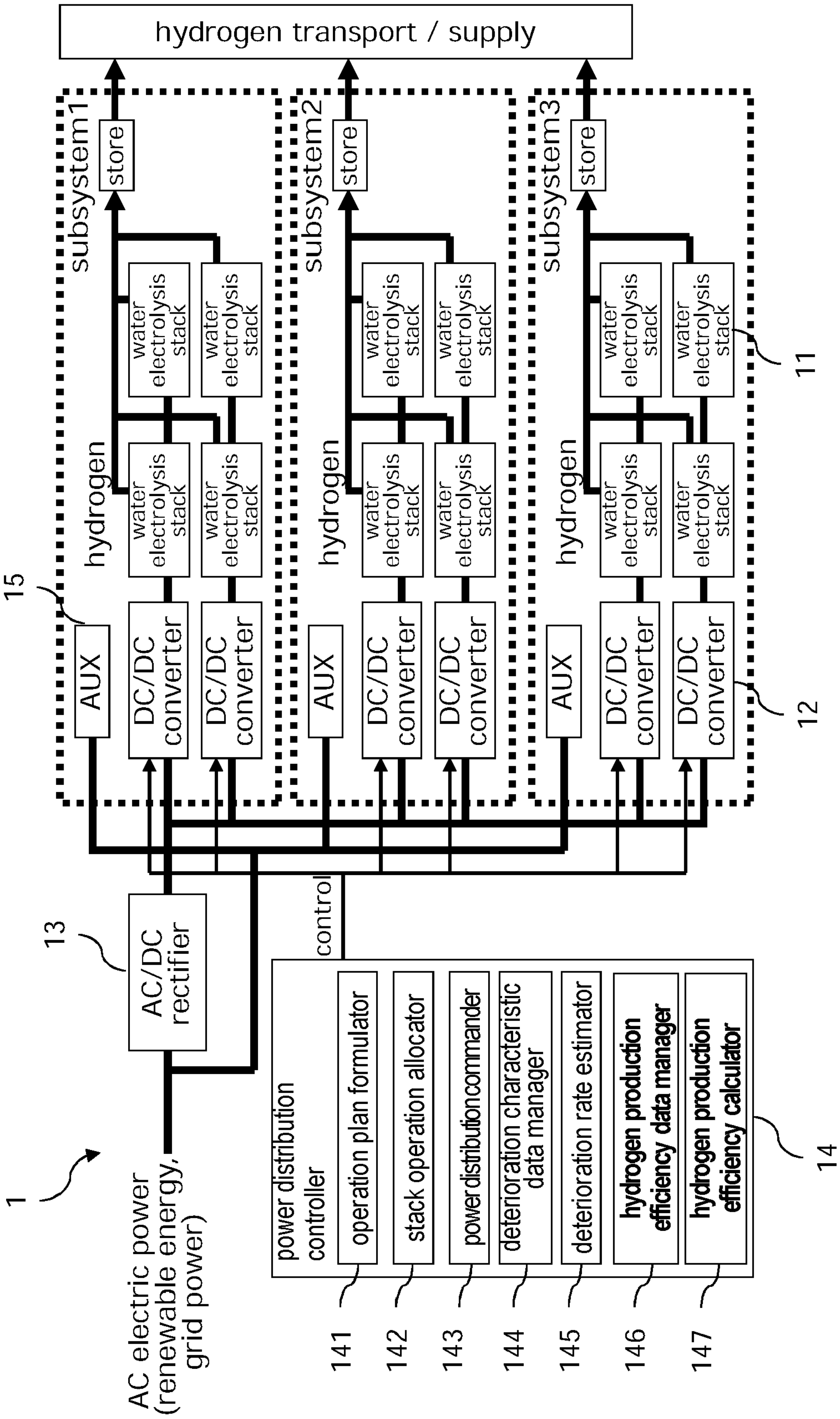
hydrogen transport / supply
subsystem1
subsystem2
subsystem3
store
hydrogen
water electrolysis stack
AUX
DC/DC converter
AC/DC rectifier
control
AC electric power (renewable energy, grid power)
power distribution controller
operation plan formulator
stack operation allocator
power distribution commander
deterioration characteristic data manager
deterioration rate estimator
hydrogen production efficiency data manager
hydrogen production efficiency calculator
1
11
12
13
14
15
141
142
143
144
145
146
147

FIG. 15

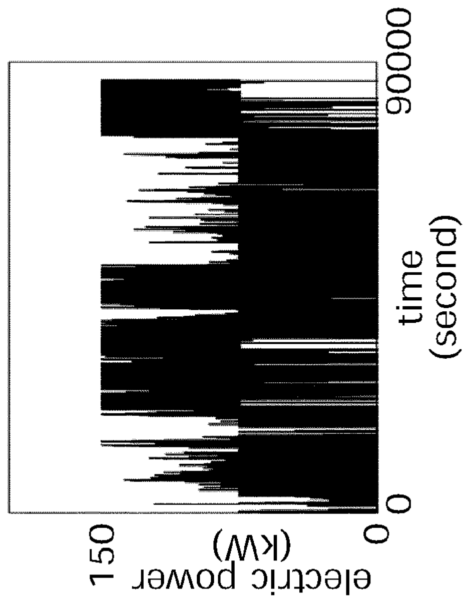
150
electric power
(kW)
0
0
90000
time
(second)

FIG. 16

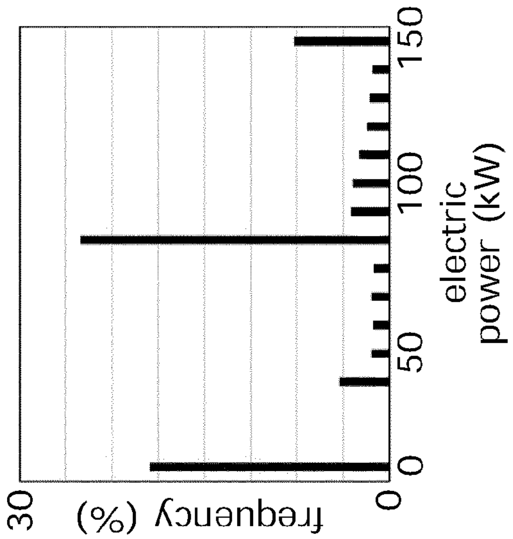
30
frequency (%)
0
0
50
100
150
electric
power (kW)

FIG. 17

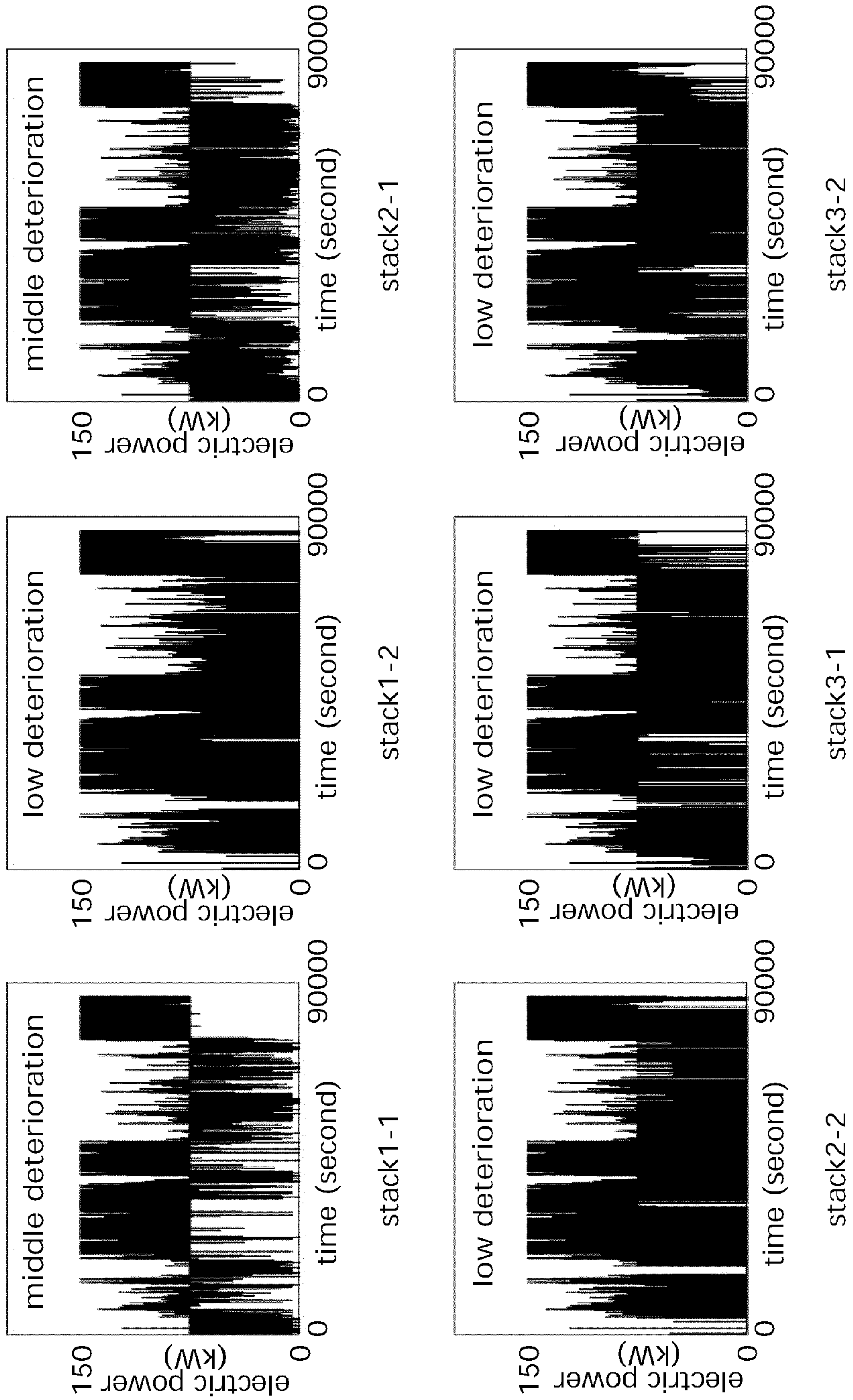
middle deterioration
stack1-1
low deterioration
stack1-2
middle deterioration
stack2-1
low deterioration
stack2-2
low deterioration
stack3-1
low deterioration
stack3-2
electric power (kW)
150
0
time (second)
0
90000

FIG. 18

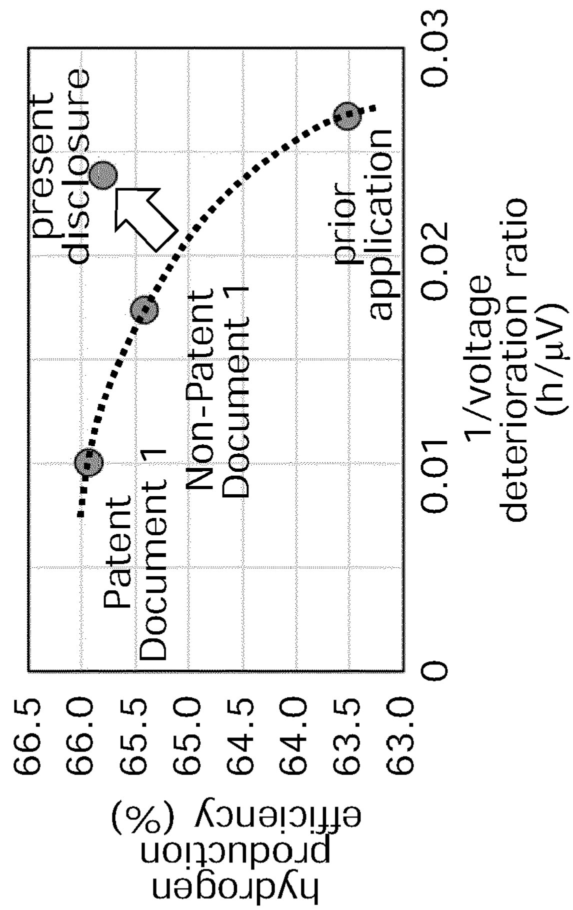
hydrogen production efficiency (%)
66.5
66.0
65.5
65.0
64.5
64.0
63.5
63.0
0
0.01
0.02
0.03
1/voltage deterioration ratio (h/μV)
Patent Document 1
Non-Patent Document 1
present disclosure
prior application

FIG. 19

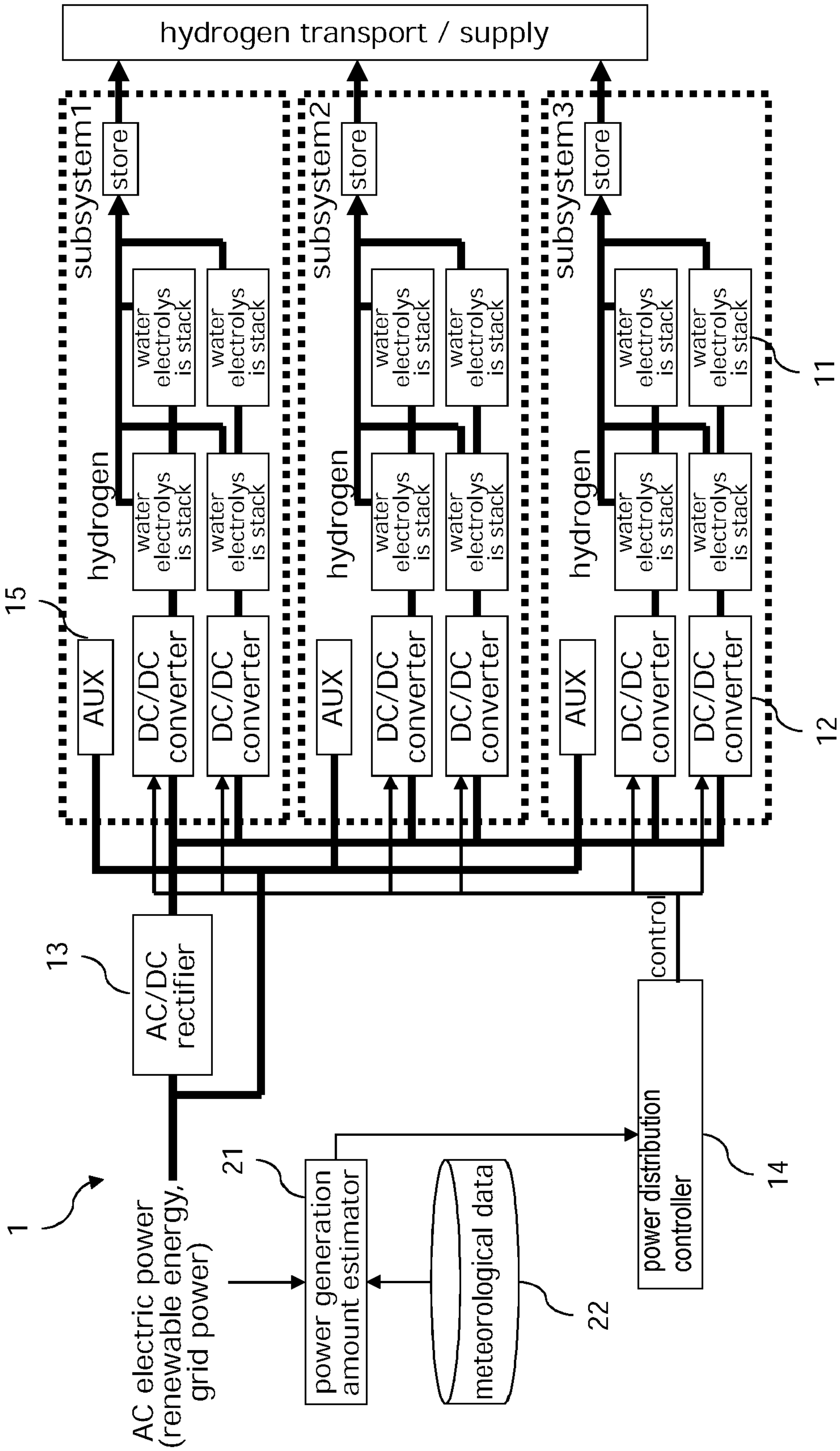
hydrogen transport / supply
subsystem1
subsystem2
subsystem3
store
water electrolys is stack
hydrogen
AUX
DC/DC converter
AC/DC rectifier
control
power distribution controller
power generation amount estimator
meteorological data
AC electric power (renewable energy, grid power)
1
11
12
13
14
15
21
22

FIG. 20

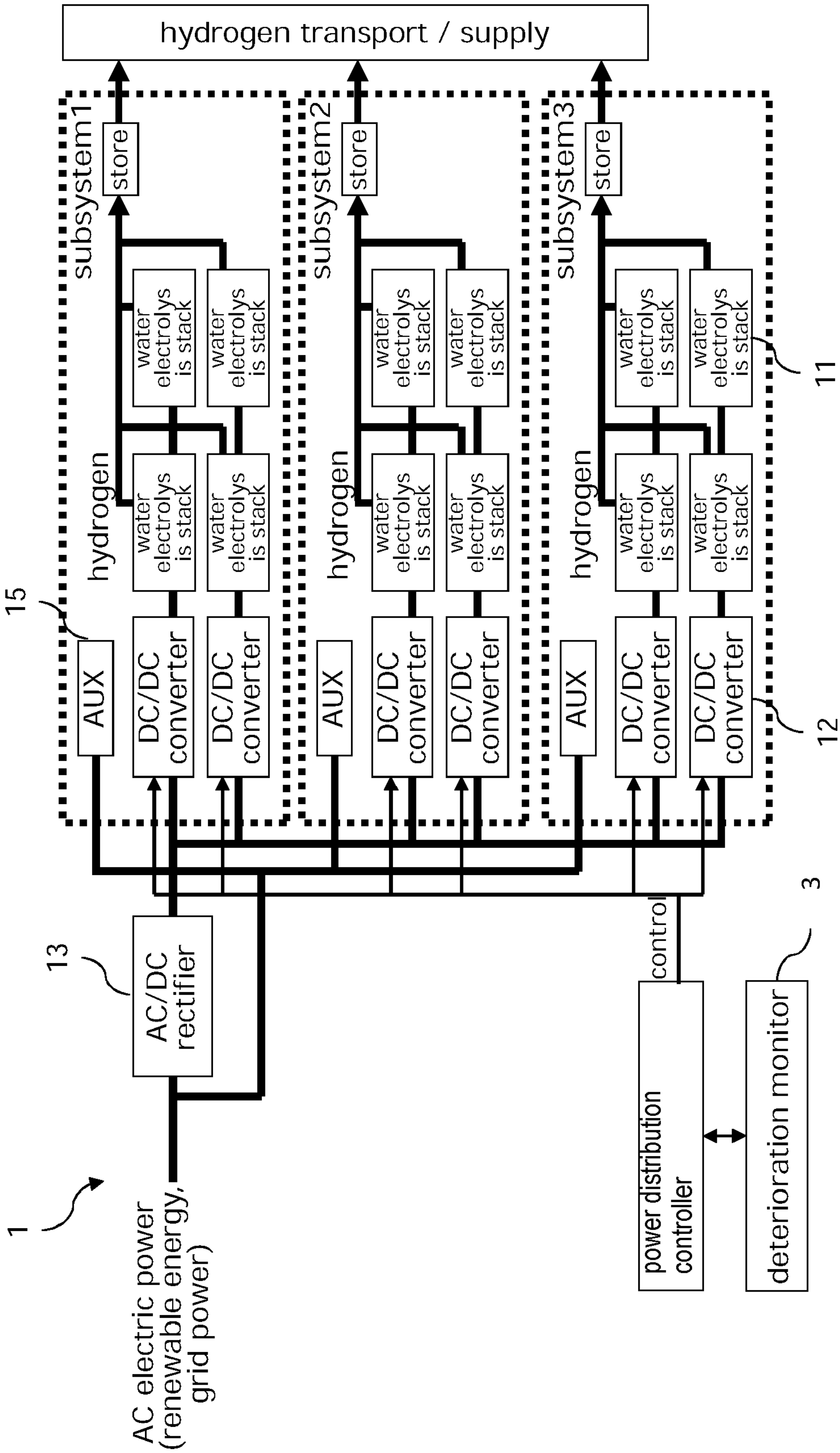

hydrogen transport / supply
subsystem1
subsystem2
subsystem3
store
hydrogen
water electrolys is stack
AUX
DC/DC converter
AC/DC rectifier
control
power distribution controller
deterioration monitor
AC electric power (renewable energy, grid power)
1
3
11
12
13
15

FIG. 21

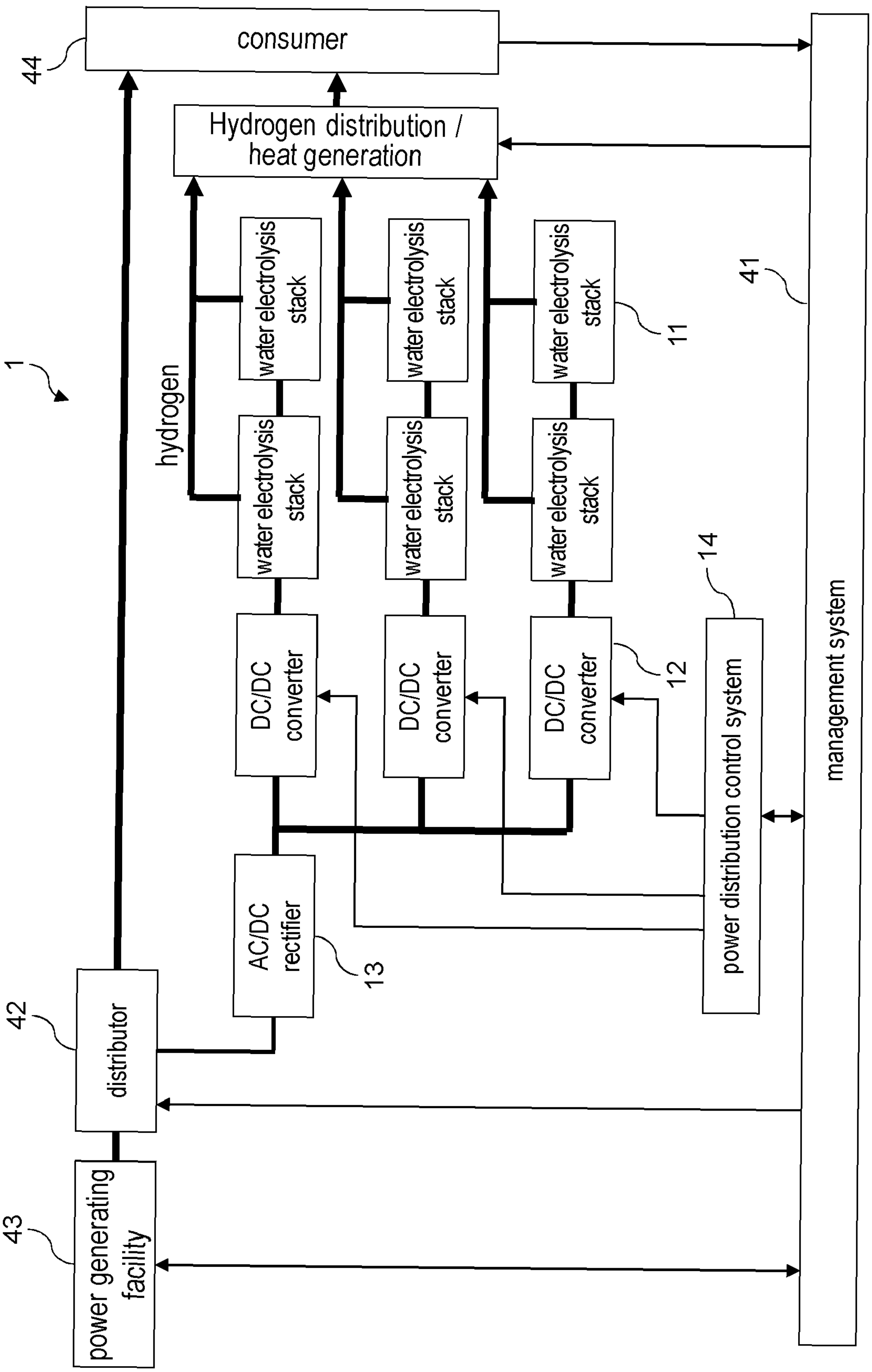
consumer
44
Hydrogen distribution / heat generation
hydrogen
water electrolysis stack
water electrolysis stack
water electrolysis stack
water electrolysis stack
water electrolysis stack
water electrolysis stack
1
11
41
14
DC/DC converter
DC/DC converter
DC/DC converter
12
AC/DC rectifier
13
power distribution control system
management system
distributor
42
power generating facility
43

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021023663 A
- JP 2007031813 A


### Non-patent literature cited in the description


- **B. FLAMM et al.** *Applied Energy,* 2021, vol. 281, 116031